# EUROPÄISCHE PATENTSCHRIFT

(11) **EP 0 844 055 B1**
(45) Veröffentlichungstag und Bekanntmachung des Hinweises auf die Patenterteilung: **19.02.2003**
(21) Anmeldenummer: 97810755.5
(22) Anmeldetag: 08.10.1997
(51) Int. Cl.: B28D 1/04

(54) **Hohlbohrwerkzeug mit einem aus zwei koaxial zueinander angeordneten miteinander verbunden Rohren gebildeten Trägerkörper**
Tubular saw having a body consisting of two coaxially mounted tubes
Scie tubulaire dont le corps consiste de deux tubes coaxiaux

(30) Priorität: 26.11.1996 DE 19648868
(43) Veröffentlichungstag der Anmeldung: 27.05.1998
(73) Patentinhaber: HILTI Aktiengesellschaft, 9494 Schaan (LI)
(72) Erfinder: Vitalil, Skalyga, 42113 Wuppertal (DE); Nekhemian, Tsypin, Dr. Ing. Habil, 42113 Wuppertal (DE)
(74) Vertreter: Wildi, Roland

(56) Entgegenhaltungen:
- EP-A- 0 430 536
- EP-A- 0 739 673
- WO-A-90/15683
- FR-A- 2 361 987
- PATENT ABSTRACTS OF JAPAN vol. 014, no. 127 (M-0947), 9.März 1990 -& JP 01 321105 A (HITACHI KOKI CO LTD), 27.Dezember 1989,

## Beschreibung

Die Erfindung betrifft ein Bohrwerkzeug gemäss dem Oberbegriff des Patentanspruchs 1.

Zur Herstellung von Bohrungen in Beton, Gestein, Mauerwerk und dgl. werden Bohrwerkzeuge verwendet, die einen hohlzylinderförmigen Trägerkörper und wenigstens einen das bohrrichtungsseitige Ende des Trägerkörpers axial überragenden Schneidkörper aufweisen. Der Vorteil bei der Anwendung derartiger Bohrwerkzeuge besteht darin, dass nur eine hohizylinderförmige Aussparung erzeugt wird, wonach der dabei stehengebliebene Kern leicht ausgebrochen werden kann. Die beim Bohren erreichbare Arbeitsleistung dieser Bohrwerkzeuge ist abhängig vom Material des zu bearbeitenden Untergrundes, von der Antriebsleistung des mit dem Bohrwerkzeug zusammenwirkenden Bohrgerätes und von der radialen Erstreckung des Schneidkörpers.

Aus der DE-OS 20 31 094 ist ein Bohrwerkzeug bekannt, das einen hohlzylinderförmigen Trägerkörper mit grosser Wandstärke und einen am bohrrichtungsseitigen Ende des Trägerkörpers angeordneten, ringförmigen Schneidkörper aufweist. Der die Wandstärke des Trägerkörpers radial überragende Schneidkörper weist eine grosse Schneidfläche auf, mit der Aussparungen mit grossen kreisringförmigen Flächen hergestellt werden können. Da sich allerdings die grosse Schneidfläche bei der Bearbeitung eines bestimmten Untergrundes und bei gegebenen Antriebsbedingungen negativ auf die Vorschubgeschwindigkeit auswirkt, ist mit diesem Bohrwerkzeug insgesamt nur eine schlechte Arbeitsleistung erreichbar.

Aus der FR2361987 ist ein Bohrwerkzeug mit hohlzylinderförmigem Trägerkörper und wenigstens einem das bohrrichtungsseitige Ende des Trägerkörpers axial überragenden Schneidkörper vorbekannt, wobei der Trägerkörper von zwei koaxial zueinander angeordneten, direkt oder radial beabstandet miteinander verbundenen Rohren gebildet ist, wobei Kühl- bzw. Spülwasser entlang des Trägerkörpers zwischen radial beabstandeten Rohren durch einen Hohlraum zum Schneidkörper zuführbar ist.

Der Erfindung liegt die Aufgabe zugrunde, ein Bohrwerkzeug zu schaffen, mit dem eine hohe Arbeitsleistung erreichbar ist, das wirtschaftlich herstellbar ist und sich sowohl durch eine hohe Festigkeit als auch durch ein geringes Gewicht auszeichnet.

Die Lösung dieser Aufgaben besteht in einem Bohrwerkzeug, welches die im Patentanspruch 1 angeführten Merkmale aufweist.

Da der erfindungsgemässe Aufbau des Trägerkörpers zu einer sehr hohen Festigkeit führt, kann die Wandstärke gegenüber herkömmlichen Trägerkörpem, die aus einem Rohr bestehen, sehr gering gehalten werden. Auf diese Weise ist es möglich, die radiale Erstreckung des Schneidkörpers und somit dessen Schneidfläche zu reduzieren. Aufgrund der kleinen Schneidfläche wird bei der Bearbeitung eines bestimmten Untergrundes bei gegebenen Antriebsbedingungen eine zu einer höheren Arbeitsleistung führende, hohe Vorschubgeschwindigkeit erreicht.

Um die radiale Erstreckung des Schneidkörpers sehr gering halten zu können, beträgt die Wandstärke jedes Rohres 0,1 mm bis 2 mm. Die geringe Wandstärke der beiden Rohre führt zudem zu einem sehr geringen Gesamtgewicht des Bohrwerkzeugs.

Aus herstelltechnischen Gründen erfolgt die Verbindung beider Rohre mittels einer Pressverbindung, die beispielsweise durch Schrumpfen erfolgt. Bei einer Schrumpfverbindung erwärmt man das äussere Rohr vor dem Fügen bzw. vor dem Aufsetzen des äusseren Rohres auf das innere Rohr. Beim Erkalten schrumpft das äussere Rohr auf das innere Rohr auf.

Die Pressverbindung kann beispielsweise auch durch Dehnen hergestellt werden. Für eine Dehnverbindung wird das innere Rohr soweit unterkühlt, dass es sich ohne Zwang in das äussere Rohr einbringen lässt. Zum Unterkühlen des inneren Rohres auf Temperaturen bis -190° wird flüssiger Stickstoff verwendet.

Das Längseinpressen ist beispielsweise eine weitere Möglichkeit, um eine Pressverbindung herstellen zu können, bei der das innere Rohr vor dem Zusammenbau einen Aussendurchmesser aufweist, der den Innendurchmesser des äusseren Rohres übersteigt. Nach dem Ineinanderdrücken beider Rohre wirkt aufgrund der Werkstoffpressung in einer Fügefläche zwischen beiden Rohren eine Haftkraft, durch die Axialkräfte und Drehmomente übertragen werden können.

Damit die Festigkeit des rohrförmigen Trägerkörpers erhöht werden kann, weist vorzugsweise das äussere Rohr an seiner Aussenseite wenigstens eine, sich wenigstens teilweise über dessen Länge erstreckende, wendelförmig verlaufende Rippe auf, deren Aussenkontur die Aussenkontur des Schneidkörpers in radialer Richtung nicht überragt.

Um einen Abtransport von Bohrklein bzw. Bohrschlamm aus der hohlzylinderförmigen Aussparung erreichen zu können, entspricht vorteilhafterweise die Steigung der wendelförmig verlaufenden Rippe dem 0,1- bis 1-fachen Aussendurchmesser des Trägerkörpers. Bei einer grossen Steigung wird bei einer gegebenen Umfangsgeschwindigkeit des Trägerkörpers das Bohrklein bzw. der Bohrschlamm sehr schnell aus der Aussparung abtransportiert. Um einen konstanten Abtransport gewährleisten zu können, weist die Rippe beispielsweise eine konstante Steigung auf.

Damit das Gesamtgewicht trotz der auf der Aussenseite des äusseren Rohres angeordneten Rippe gering gehalten werden kann, ist vorzugsweise an der Innenseite des äusseren Rohres im Bereich der Rippe eine sich wenigstens teilweise über die gesamte Länge des inneren Rohres erstreckende, wendelförmig verlaufende Vertiefung angeordnet.

Die bei bestimmten Bohrvorgängen notwendige Zufuhr von Kühl- bzw. Spülwasser zu dem Schneidkörper kann beispielsweise durch das Bohrwerkzeug hindurch erfolgen, indem sich der von der wendelförmig verlaufenden Vertiefung des äusseren Rohres und der Aussenkontur des inneren Rohres gebildete Hohlraum durch den gesamten Trägerkörper hindurch bis zum Schneidkörper hin erstreckt.

Damit das Kühl- bzw. Spülwasser beim Austreten aus dem Hohlraum im bohrrichtungsseitigen Endbereich des rohrförmigen Trägerkörpers dem Schneidkörper bzw. dem Bearbeitungsbereich zugeführt werden kann, weist beispielsweise der ringförmig ausgebildete Schneidkörper parallel zur Längserstreckung des rohrförmigen Trägerkörpers verlaufende Schlitze oder im wesentlichen radial verlaufende Bohrungen auf. Die Schlitze können sich wenigstens teilweise über die gesamte Höhe des Schneidkörpers erstrecken und bohrrichtungsseitig offen ausgebildet sein. Wird der Schneidkörper beispielsweise von einzelnen Segmenten gebildet, die in Umfangsrichtung voneinander beabstandet sind, so ist ein Austritt des Kühl- bzw. Spülwassers aus dem Hohlraum zwischen den Segmenten möglich.

Ein leichtes und schnelles Auswechseln des Schneidkörper wird vorzugweise mittels eines ringförmigen Trägers erreicht, der zwischen dem hohlzylinderförmigen Trägerkörper und dem Schneidkörper angeordnet ist. Die radiale Erststreckung des Trägers entspricht höchstens der radialen Erstreckung des Schneidkörpers. Mittels Lötverbindungen ist der ringförmige Träger mit dem Trägerkörper und dem Schneidkörper verbunden.

Die Erfindung wird anhand einer Zeichnung, die ein Ausführungsbeispiel wiedergibt, näher erläutert.

Das dargestellte Bohrwerkzeug setzt sich zusammen aus einem Einsteckende 1, einem hohlzylinderförmigen Trägerkörper 2, einem ringförmigen Träger 8 und einem aus mehreren einzelnen Segmenten 18 gebildeten Schneidkörper 3. Das an einen ebenen Boden 13 angeformte Einsteckende 1 ist zylindrisch ausgebildet und weist eine sich parallel zur Längserstreckung des Bohrwerkzeuges erstreckende Verriegelungsnut 14 auf, die an beiden Enden geschlossen ist. Mit Hilfe dieser Verriegelungsnut 14 ist das Bohrwerkzeug in einem Werkzeughalter eines nicht dargestellten Bohrgerätes axial festlegbar. Der ebene Boden 13 ist mittels einer Lötverbindung fest mit dem hohlzylinderförmigen Trägerkörper 2 verbunden. Dieser Trägerkörper 2 setzt sich zusammen aus zwei koaxial zueinander angeordneten, dünnwandigen Rohren 4, 5, die mittels einer Pressverbindung fest miteinander verbunden sind. Die beiden Rohre 4, 5 können beispielsweise auch mittels einer Niet-, Klebe-, Schweiss-, Löt- oder Klemmverbindung fest miteinander verbunden sein.

Der ringförmige Träger 8 ist am bohrrichtungsseitigen Endbereich der beiden Rohre 4, 5 mittels einer Lötverbindung befestigt und dient als Austauschteil, an dem die Segmente 18 angeordnet sind. Sind die Segmente 18 verschlissen, dann wird der ringförmige Träger 8 zusammen mit den verschlissenen Segmenten 18 gegen einen anderen Träger 8 mit neuen Segmenten 18 ausgetauscht. Der ringförmige Träger 8 ragt mit einem sich entgegen der Bohrrichtung erstreckenden Bund 12 in das Innere des Trägerkörpers 2 bzw. in das Innere des inneren Rohres 5. Im dargestellten Ausführungsbeispiel überragt der ringförmige Träger 8 den Aussendurchmesser des Trägerkörpers 2 in radialer Richtung. Der Innendurchmesser des ringförmigen Trägers 8 ist kleiner als der Innendurchmesser des Trägerkörpers 2. Der Aussendurchmesser des Bundes 12 entspricht im wesentlichen dem Innendurchmesser des Trägerkörpers 2 bzw. des inneren Rohres 5. Mittels einer Lötverbindung ist der ringförmige Träger 8 an dem Trägerkörper 2 angeordnet.
An der bohrrichtungsseitigen Stimseite des ringförmigen Trägers 8 sind die den Schneidkörper 3 bildenden Segmente 18 in Umfangsrichtung jeweils voneinander beabstandet angeordnet und stumpf aufgelötet.

Der Bund 12 des ringförmigen Trägers 8 kann sich aber auch beispielsweise teilweise entlang des äusseren Rohres 4 erstrecken, wobei der Innendurchmesser des Bundes 12 im wesentlichen dem Aussendurchmesser D des Trägerkörpers 2 bzw. des äusseren Rohres 4 entspricht. Anstatt des Bundes 12 kann der ringförmige Träger 8 beispielsweise auch einen Schlitz aufweisen, in die der Trägerkörper 2 bzw. die beiden bohrrichtungsseitigen Enden der Rohre 4, 5 steckbar sind, so dass sich der ringförmige Träger 8 teilweise entlang den Innenseiten des äusseren Rohres 4 und der inneren Rohres 5 erstreckt.

Der Schneidkörper 3 ist bzw. die Segmente 18 sind beispielsweise auch einzeln, ohne den ringförmigen Träger 8 an dem Trägerkörper 2 anordbar, wobei diese zur leichteren Montage auf dem Trägerkörper 2 die gleiche Verbindungsgeometrie aufweisen, wie der ringförmige Träger 8.

Um die Festigkeit des rohrförmigen Trägerkörpers 2 erhöhen zu können, weist das äussere Rohr 4 an der Aussenseite eine, sich wenigstens teilweise über die gesamte Länge des äusseren Rohres 4 erstreckende, wendelförmig verlaufende Rippe 6 auf, die die Aussenseite des äusseren Rohres 4 höchstens um jenen Betrag in radialer Richtung überragt, um den die Aussenkontur der Segmente 18 die Aussenseite des äusseren Rohres 4 überragen.

Die dem Abtransport des Bohrklein bzw. Bohrschlammes aus der Aussparung dienende wendelförmige Rippe 6 weist eine konstante Steigung h auf.

Damit das Gesamtgewicht trotz der auf der Aussenseite des äusseren Rohres 4 angeordneten Rippe 6 gering gehalten werden kann, ist an der Innenseite 9 des äusseren Rohres 4 im Bereich der Rippe 6 eine, sich wenigstens teilweise über die gesamte Länge des inneren Rohres 5 erstreckende, wendelförmig verlaufende Vertiefung 7 angeordnet. Diese Vertiefung 7 bildet zusammen mit der Aussenseite 10 des inneren Rohres 5 einen Hohlraum 11, der sich über die gesamte Länge des Trägerkörpers 2 erstreckt.

Die bei bestimmten Bohrvorgängen notwendige Zufuhr von Kühl- bzw. Spülwasser zu den Segmenten 18 erfolgt durch diesen Hohlraum 11, der im Bereich des Einsteckendes 1 über eine Verbindungsbohrung 15 in dem ebenen Boden 13 mit einer zentralen Bohrung 16 des Einsteckendes 1 verbunden ist. Im Bereich des ringförmigen Trägers 8 mündet der Hohlraum 11 in eine zwischen zwei Segmenten 18 angeordnete Durchgangsbohrung 17.

Das erfindungsgemässe Bohrwerkzeug ist beispielsweise auch ohne ein Einsteckende über das innere Rohr oder das äussere Rohr des Trägerkörpers mit einer nicht dargestellten Werkzeugaufnahme in Verbindung bringbar.

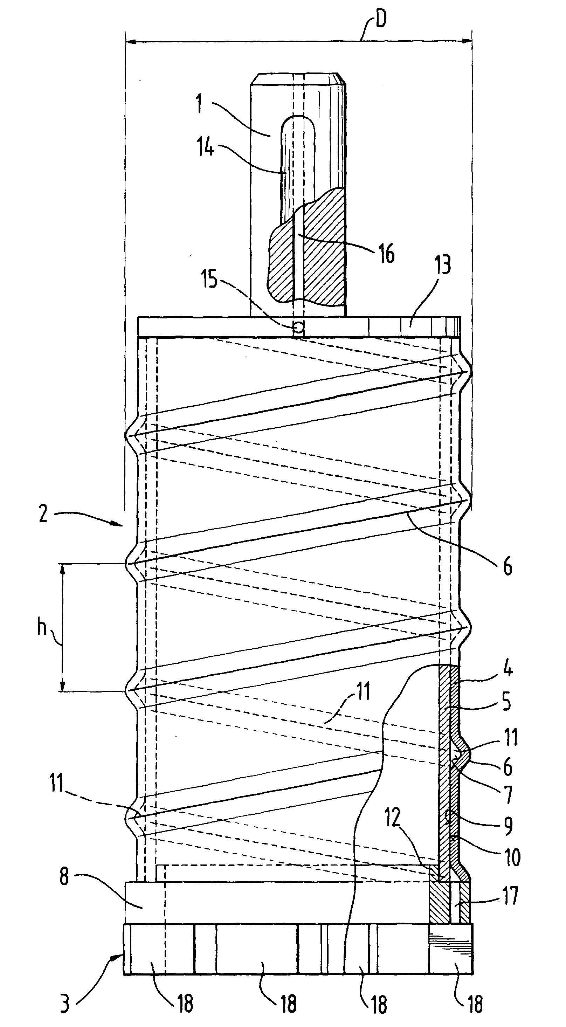

## Patentansprüche

1. Bohrwerkzeug mit hohlzylinderförmigem Trägerkörper (2) und wenigstens einem das bohrrichtungsseitige Ende des Trägerkörpers (2) axial überragenden Schneidkörper (3), wobei der Trägerkörper (2) von zwei koaxial zueinander angeordneten, direkt miteinander verbundenen Rohren (4, 5) gebildet ist, **dadurch gekennzeichnet, dass** die Wandstärke jedes Rohres (4, 5) mindestens 0,1 mm und maximal 2 mm beträgt und dass beide Rohre (4, 5) direkt miteinander mittels einer Pressverbindung fest verbunden sind, bei welcher in der Fügefläche zwischen beiden Rohren (4, 5) eine Haftkraft wirkt, durch die Axialkräfte und Drehmomente übertragbar sind.

2. Bohrwerkzeug nach Anspruch 1, **dadurch gekennzeichnet, dass** das äussere Rohr an seiner Aussenseite wenigstens eine, sich wenigstens teilweise über dessen Länge erstreckende, wendelförmig verlaufende Rippe (6) aufweist, da zwischen dem äusseren Rohr (4) und der Aussenseite (10) des inneren Rohres (5) ein Hohlraum (11) zur Zuführung von Kühl- bzw. Spülwasser zum Schneidkörper (3) ausgebildet ist.

3. Bohrwerkzeug nach Anspruch 2, **dadurch gekennzeichnet, dass** die Steigung (h) der wendelförmig verlaufenden Rippe (6) dem 0,1- bis 1-fachen Aussendurchmesser (D) des Trägerkörpers (2) entspricht.

4. Bohrwerkzeug nach einem der Ansprüche 1 bis 3, **dadurch gekennzeichnet, dass** zwischen dem hohlzylinderförmigen Trägerkörper (2) und dem Schneidkörper (3) ein ringförmiger Träger (8) angeordnet ist.

## Claims

1. Drilling tool with hollow cylindrical support body (2) and at least one cutting element (3) which axially protrudes over the end of the support body (2) at the drilling side, and the support body is established by two pipes (4, 5) arranged coaxially relative to each other and directly joined together, **characterised in that** the wall thickness of each pipe (4, 5) is at least 0.1 mm and maximal 2 mm, and both pipes (4, 5) are firmly joined to each other directly by means of a press connection with an adhesive force acting in the joining surface between both pipes (4, 5) through which axial loads and torques can be transmitted.

2. Drilling tool according to Claim 1, **characterised in that** the outer pipe comprises on its outside at least one helical web (6) which extends at least partially over its length, as a hollow space (11) for delivery of cooling or flushing water to the cutting element (3) is arranged between the outer pipe (4) and the outside (10) of the inner pipe (5).

3. Drilling tool according to Claim 2, **characterised in that** the rise (h) of the helically extending web (6) corresponds with between 0.1 and 1 times the outside diameter (D) of the support body (2).

4. Drilling tool according to one of Claims 1 to 3, **characterised in that** between the hollow cylindrical support body (2) and the cutting element (3) is arranged an annular support (8).

## Revendications

1. Outil de forage avec corps porteur en forme de cylindre creux (2) et au moins un corps de coupe (3) dépassant axialement de l'extrémité, côté direction de forage, du corps porteur (2), le corps porteur (2) étant formé de deux tubes (4, 5) disposés coaxialement l'un à l'autre et reliés directement l'un à l'autre, **caractérisé en ce que** l'épaisseur de paroi de chaque tube (4, 5) est d'au moins 0,1 mm et au maximum de 2 mm, et **en ce que** les deux tubes (4, 5) sont solidarisés directement entre eux au moyen d'une liaison à ajustement serré, dans laquelle agit, dans la surface d'assemblage entre les deux tubes (4, 5), une force de retenue qui permet de transmettre les forces axiales et les couples.

2. Outil de forage selon la revendication 1, **caractérisé en ce que** le tube extérieur comporte, sur sa face extérieure, au moins une nervure à tracé hélicoïdal (6) s'étendant au moins en partie sur sa longueur car entre le tube extérieur (4) et la face extérieure (10) du tube intérieur (5) est ménagée une cavité (11) pour amener de l'eau de refroidissement, respectivement de rinçage au corps de coupe (3).

3. Outil de forage selon la revendication 2, **caractérisé en ce que** le pas (h) de la nervure à tracé hélicoïdal (6) correspond à 0,1 à 1 fois le diamètre extérieur (D) du corps porteur (2).

4. Outil de forage selon une des revendications 1 à 3, **caractérisé en ce qu'**entre le corps porteur en forme de cylindre creux (2) et le corps de coupe (3) est disposé un support annulaire (8).
